# EUROPEAN PATENT APPLICATION

(11) **EP 4 576 361 A1**
(43) Date of publication of application: **25.06.2025**
(21) Application number: 23875141.6
(22) Date of filing: 25.09.2023
(51) Int. Cl.: H01M 50/24, H01M 50/59, H01M 50/204, H01M 50/249

(54) **BATTERY PACK AND VEHICLE COMPRISING SAME**

(30) Priority: 07.10.2022 KR 20220129123
(71) Applicant: LG Energy Solution, Ltd., Seoul 07335 (KR)
(72) Inventor: KIM, Hae Jin, Daejeon 34122 (KR); HONG, Se In, Daejeon 34122 (KR); MIN, Byung Doo, Daejeon 34122 (KR); SIN, Je Hwan, Daejeon 34122 (KR)
(74) Representative: Plasseraud IP
(86) International application number: PCT/KR2023/014702
(87) International publication number: WO 2024/076075

(57) **Abstract**

A battery pack according to the present invention includes a battery module, and a pack housing configured to accommodate the battery module, wherein the pack housing may include a lower case in which the battery module is accommodated, an upper case coupled to cover an upper opening of the lower case, a gasket provided on an interface between the lower case and the upper case, and an insulating member disposed between the battery module and the gasket.

## Description

### TECHNICAL FIELD

### CROSS-REFERENCE TO RELATED APPLICATION

The present application claims the benefit of the priority of Korean Patent Application No. 10-2022-0129123, filed on October 7, 2022, which is hereby incorporated by reference in its entirety.

### TECHNICAL FIELD

The present invention relates to a battery pack that is capable of preventing a gasket from being damaged by flame and gases generated during thermal runaway, and to a vehicle including the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

In addition, the secondary batteries are classified according to their structures. For example, the secondary battery may be classified into a cylindrical type secondary battery and a pouch-type secondary battery. The cylindrical type secondary battery is manufactured by winding a long sheet-shaped electrode unit several times in the form of a bulk jelly roll with a separator sheet therebetween to manufacture an electrode assembly and then accommodating the manufactured electrode assembly in a cylindrical can, etc. The pouch-type secondary battery is manufactured by stacking and folding electrode units, each of which is provided as a unit having a predetermined size, with a separator sheet therebetween to manufacture an electrode assembly and then accommodating the manufactured electrode assembly in a pouch.

Secondary batteries have attracted considerable attention as power sources for electric vehicles (EVs), hybrid electric vehicles (HEVs), and plug-in hybrid electric vehicles (PHEVs), which have been developed to solve limitations, such as air pollution, caused by existing gasoline and diesel vehicles that use fossil fuels. In other words, the secondary batteries are used in the form of a battery pack including a plurality of battery modules.

For example, the battery pack includes a battery module in which a plurality of secondary batteries are connected in series or parallel, and a pack housing that accommodates the battery module. The pack housing includes a pack case that accommodates the battery module, a pack cover coupled to an opening of the pack case, and a gasket that seals a gap between the pack case and the pack cover.

However, the battery pack according to the related art has a problem in that the gasket is damaged as the gasket is directly exposed to flame and a gas generated during thermal runaway. In particular, there is a problem in that the flame and the gas are ejected to the outside between the pack case and the pack cover due to the damage of the gasket to cause accidents.

### DISCLOSURE OF THE INVENTION

### TECHNICAL PROBLEM

An object of the present invention is to provide a battery pack, which is characterized by including a protection member that prevents a gasket from being directly exposed to flame and a gas, which are generated during thermal runaway, and due to this feature, the damage of the gasket is prevented, and the ejection of the flame and the gas between the pack case and the pack cover is prevented to prevent accidents from occurring, and a vehicle including the same.

### TECHNICAL SOLUTION

A battery pack according to the present invention includes a battery module, and a pack housing configured to accommodate the battery module, wherein the pack housing may include a lower case in which the battery module is accommodated, an upper case coupled to cover an upper opening of the lower case, a gasket provided on an interface between the lower case and the upper case, and an insulating member disposed between the battery module and the gasket.

The insulating member may be disposed between an end of the battery module, which is disposed in a full-length direction of the battery module, and the gasket.

The insulating member may be configured to surround the gasket that is directed toward the end of the battery module.

The insulating member may have an area greater than that of the end of the battery module.

One side of the insulating member may be attached and fixed to an inner wall of the lower case.

The other side of the insulating member may be attached and fixed to an upper end of the battery module.

The insulating member may be made of a flexible insulating paper.

The insulating paper may be made of mica.

An elastic member configured to maintain an outer appearance of the insulating member may be attached to a surface of the insulating member that is directed toward the gasket.

The elastic member may have heat resistance and is attached to an entire surface of the insulating member.

One end of the insulating member may extend up to a bottom surface of the lower case.

An insulating layer may be applied on an end of the gasket disposed inside the pack housing.

The insulating layer may be made of the same material as the insulating member.

A vehicle according to the present invention may include the battery pack.

### ADVANTAGEOUS EFFECTS

The battery pack according to the present invention may be characterized in that the insulating member is disposed between the battery module and the gasket. Due to this feature, the flames and the gas, which are generated during the thermal runaway, may be prevented from being directly exposed to the gasket to prevent the gasket from being damaged, thereby preventing the accidents such as the ejection of the flame and the gas between the pack case and the pack cover from occurring.

In addition, the battery pack according to the present invention may be characterized in that the insulating member is disposed between the end of the battery module disposed in the full-length direction of the battery module and the gasket. Due to this feature, the gasket may be stably protected from the flame and the gas, which are generated during the thermal runaway.

In addition, the battery pack according to the present invention may be characterized in that the insulating member surrounds the gasket that is directed toward the end of the battery module. Due to this feature, the gasket may be stably protected from the flame and the gas, which are generated during the thermal runaway.

In addition, the battery pack according to the present invention may be characterized in that the insulating member has one side attached and fixed to the inner wall of the lower case and the other side attached and fixed to the upper end of the battery module. Due to this feature, the fixing force of the insulating member disposed in the pack housing may increase, and the insulating member may be prevented from being deformed by being folded.

The battery pack of the present invention may be characterized in that an elastic member is attached to the surface of the insulating member. Due to this feature, the outer appearance of the insulating member may be maintained.

The battery pack according to the present invention may be characterized in that one end of the insulating member extends up to the bottom surface of the lower case. Due to this feature, the flame and the gas, which are generated during the thermal runaway, may be prevented from being introduced between one end of the insulating member and the bottom surface of the lower case to prevent the gasket from being damaged.

### BRIEF DESCRIPTION OF THE DRAWINGS

FIG. 1 is a perspective view of a battery back according to a first embodiment of the present invention.
FIG. 2 is a side view of FIG. 1.
FIG. 3 is a plan view of FIG. 1.
FIG. 4 is a cross-sectional view taken along line A-A of FIG. 1.
FIG. 5 is a cross-sectional view taken along line B-B of FIG. 1.
FIG. 6 is an enlarged view of a portion C illustrated in FIG. 4.
FIG. 7 is an enlarged view of a portion D illustrated in FIG. 6.
FIG. 8 is an enlarged view of a portion E illustrated in FIG. 6.
FIG. 9 is a cross-sectional view of a battery pack according to a second embodiment of the present invention.
FIG. 10 is a cross-sectional view of a battery pack according to a third embodiment of the present invention.
FIG. 11 is a schematic side view of a vehicle according to a fourth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Battery pack according to first embodiment of the present invention]

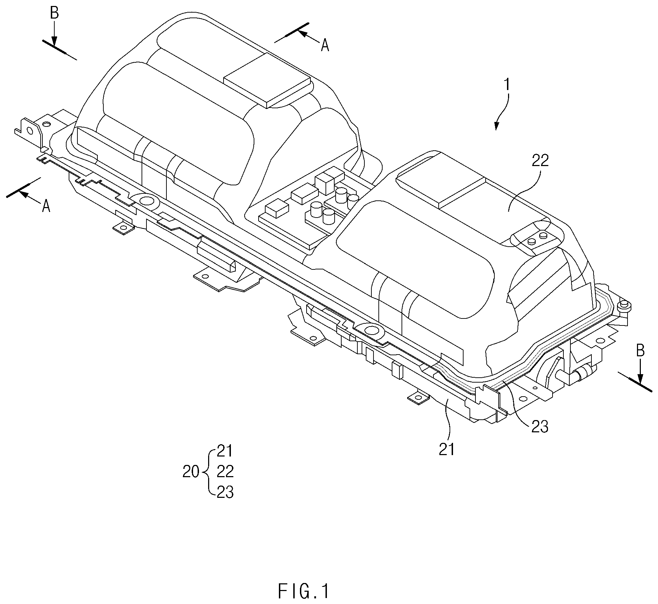

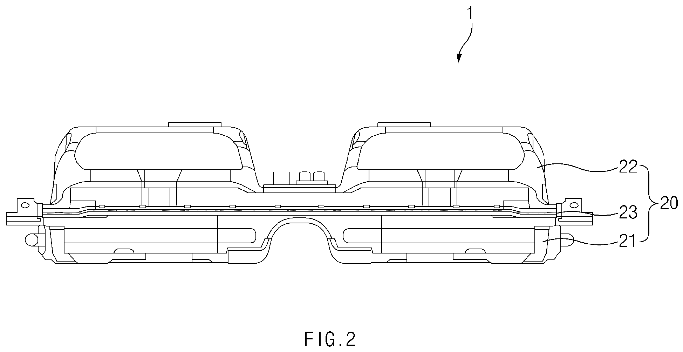

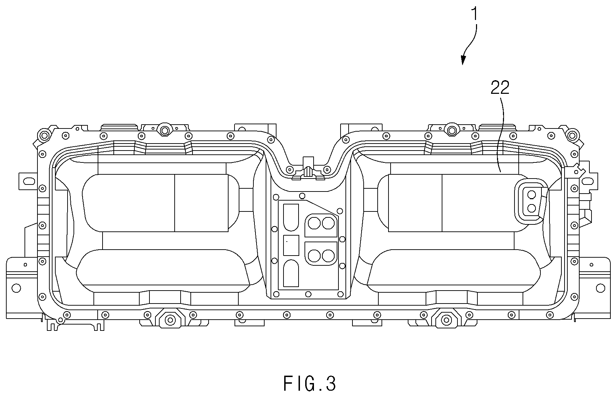

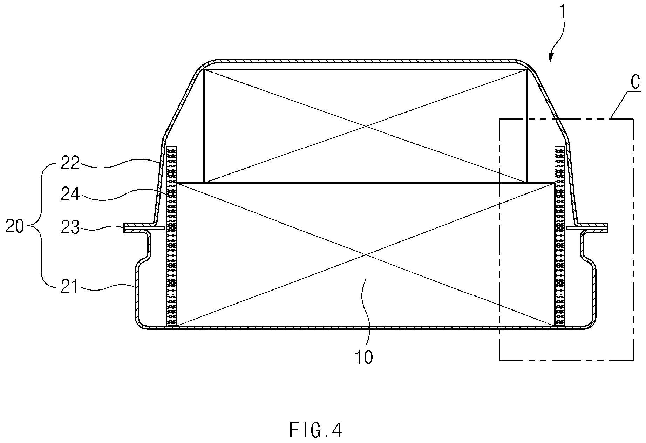

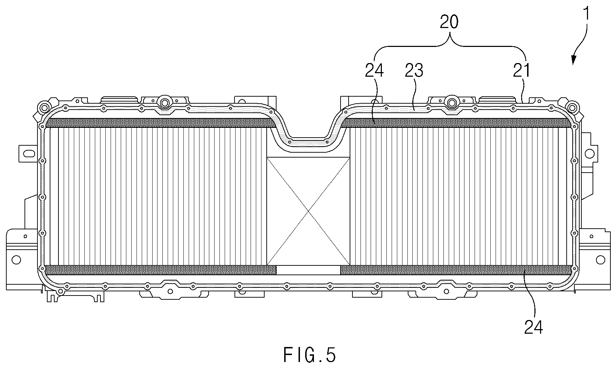

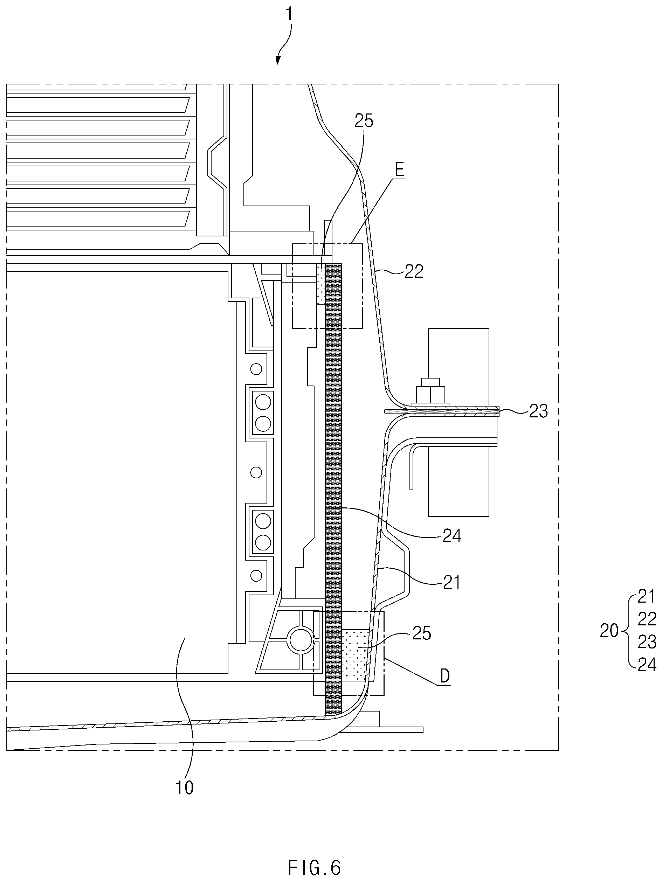

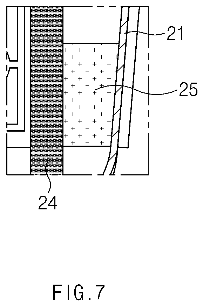

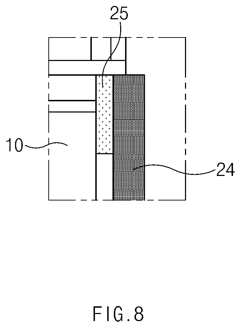

FIG. 1 is a perspective view of a battery back according to a first embodiment of the present invention, FIG. 2 is a side view of FIG. 1, FIG. 3 is a plan view of FIG. 1, FIG. 4 is a cross-sectional view taken along line A-A of FIG. 1, FIG. 5 is a cross-sectional view taken along line B-B of FIG. 1, FIG. 6 is an enlarged view of a portion C illustrated in FIG. 4, FIG. 7 is an enlarged view of a portion D illustrated in FIG. 6, and FIG. 8 is an enlarged view of a portion E illustrated in FIG. 6.

As illustrated in FIGS. 1 to 5, a battery pack 1 according to a first embodiment of the present invention includes a battery module 10 and a pack housing 20 accommodating the battery module 10.

### Battery module

The battery module 10 has a structure in which a plurality of battery cells are connected in series and/or in parallel. Here, each of the battery cells includes an electrode assembly and a case in which the electrode assembly is accommodated, and the electrode assembly has a structure in which electrodes and separators are alternately arranged. The electrodes may be a positive electrode and a negative electrode.

The battery module 10 may further include a sensing part and electrical components.

The sensing part serves to transmit sensing information about electrical characteristics, such as a voltage of a battery cell, to a device such as a BMS. The BMS may control the battery cells based on the voltage information transmitted from the sensing part. In addition, the sensing part may be mounted on a frame so as to be electrically connected to an electrode lead of the battery cell.

The electrical components may include at least one or more of the BMS, a current sensor, a relay, and a fuse. The BMS (battery management system) refers to a device for managing a secondary battery, which generally controls charging and discharging operations of the battery cell. An upper end of an insulating member, which will be described later, may be attached to an upper end of each of the electrical components to fix the upper end of the insulating member. The current sensor is a component that senses charging/discharging current of the battery cell, and the relay is a switching component that selectively opens and closes a charging/discharging path through which the charging/discharging current of the battery cell flows. The fuse is a component that blocks the flow of charging/discharging current when an abnormality occurs in the battery cell.

### Pack housing

The pack housing 20 has a structure that accommodates one or more battery modules 10, preferably two or more battery modules 10. Here, the pack housing 20 serves as an exterior of the battery pack and protects the battery module 10 from an external impact.

That is, the pack housing 20 includes a lower case 21, an upper case 22, and a gasket 23.

The lower case 21 is configured to accommodate the battery module 10. That is, the upper case 22 has a structure with an opened upper accommodation space, and the battery module 10 is accommodated in the accommodation space.

The upper case 22 is coupled to cover an upper opening of the lower case 21, thereby finishing the upper opening of the lower case 21. Here, the upper case 22 and the lower case 21 may be coupled to each other through coupling means such as bolts and nuts.

The gasket 23 is provided on an interface between the lower case 21 and the upper case 22 to seal a gap between the lower case 21 and the upper case 22. Particularly, a material of the gasket 23 may be one or more selected from the group consisting of synthetic rubber, natural rubber, silicone, and polyvinyl chloride (PVC).

When high-temperature heat is generated in the battery pack 1 during a charging and discharging process, it may be difficult to effectively cool a temperature of the entire battery cell.

Particularly, if the heat of the battery module 10, which is generated during the charging and discharging process, is not effectively removed from the battery pack 1, thermal runaway may occur, and thus, the gasket 23 may be directly exposed to flame and a gas, which are generated during the thermal runaway, and may be damaged, and as a result, the flame and the gas may be ejected to a portion of the pack housing 20 in which the gasket 23 is damaged, to cause accidents.

The battery pack 1 according to the first embodiment of the present invention has a structure that is capable of preventing the gasket 23 from being damaged by the flame and the gas, which are generated during the thermal runaway.

That is, the battery pack 1 according to the first embodiment of the present invention includes an insulating member 24 disposed between the battery module 10 and the gasket 23. That is, the insulating member 24 may prevent the gasket 23 from being directly exposed to the flame and the gas during the thermal runaway of the battery module 10 to prevent the gasket 23 from being damaged, thereby preventing accidents from occurring and securing safety.

Particularly, as illustrated in FIG. 6, the insulating member 24 may be disposed between an end of the battery module 10 (each of upper and lower portions of the battery module 10 when viewed in FIG. 5), which is disposed in a full-length direction of the battery module 10, and the gasket 23. In more detail, the insulating member 24 may be disposed between the electrode lead of the battery cell provided in the battery module 10 and the gasket 23.

In the battery cell, a sealing part of the pouch, from which the electrode lead is withdrawn, has sealing force less than that of a remaining sealing part, and thus, when overcharging, there is a high possibility that the flame and the gas is ejected first from the sealing part of the pouch, on which the electrode lead is disposed. Thus, the insulating member 24 may be disposed between the end of the battery module 10, on which the electrode lead is disposed, and the gasket 23 to effectively blocking the flame and the gas during the thermal runaway of the battery module 10, thereby significantly preventing the gasket 23 from being damaged.

The insulating member 24 surrounds the gasket 23 that is directed toward the end of the battery module 10. That is, the insulating member 24 surrounds only a portion of the gasket 23, which is directed toward the end of the battery module 10, of the entire gasket 23. Thus, the insulating member 24 may be provided in a shape that surrounds the gasket 23 to stably protect the gasket 23 from the flame and the gas, which are generated during the thermal runaway.

The insulating member has an area greater than that of the end of the battery module 10. Thus, the flame and the gas may be effectively blocked during the thermal runaway of the battery module 10, and as a result, the gasket 23 may be stably protected.

One side of the insulating member 24 (a lower portion of the insulating member 24 when viewed in FIG. 7) may be attached and fixed to an inner wall of the lower case 21, as illustrated in FIG. 7. Particularly, one side of the insulating member 24 may be attached to the inner wall of the lower case 21 using an adhesive 25. Thus, a movement phenomenon of the one side of the insulating member 24 may be prevented. Particularly, the lower portion of the insulating member 24 may be in close contact with the inner wall of the lower case 21, and as a result, the flame and the gas may be prevented from being introduced between the lower portion of the insulating member 24 and the inner wall of the lower case 21.

The other side of the insulating member 24 (an upper portion of the insulating member 24 when viewed in FIG. 8) may be attached and fixed to the upper end of the battery module 10. Particularly, the other side of the insulating member 24 may be attached to the upper end of the battery module 10 using the adhesive 25. Thus, the insulating member 24 may be maintained in an unfolded state. Here, the entire other side of the insulating member 24 may be attached to the upper end of the battery module 10, and as a result, an edge of the other end of the insulating member 24 may be prevented from being folded.

The insulating member 24 may be made of a flexible insulating paper. Thus, the insulating member 24 may be modified and disposed to match an inner space of the pack housing 20, and as a result, ease of use and installation may be improved.

The insulating paper is made of mica. Here, mica has good thermal conductivity, excellent electrical insulation, and mechanical processability. In addition, the insulating member 24 may be made of a material that does not conduct electricity or heat. For example, the insulating member 24 may be an electrical insulator or a thermal insulator.

One end of the insulating member 24 (a lower end of the insulating member 24 when viewed in FIG. 7) extends to be in close contact with a bottom surface of the lower case 21. Thus, when the battery module 10 thermally runs away, the flame and the gas may be prevented from being discharged between the lower end of the insulating member 24 and the lower case 21.

Therefore, in the battery pack 1 according to the first embodiment of the present invention, the insulating member 24 may be disposed between the battery module 10 and the gasket 23 to prevent the gasket 23 from being directly exposed to the flame and the gas, which are generated during the thermal runaway of the battery module 10, thereby preventing the gasket 23 from being damaged, and as a result, the safety may be improved by preventing the accidents from occurring.

Hereinafter, in descriptions of another embodiment of the present invention, constituents having the same function as the above-mentioned embodiment have been given the same reference numeral in the drawings, and thus duplicated description will be omitted.

### [Battery pack according to second embodiment of the present invention]

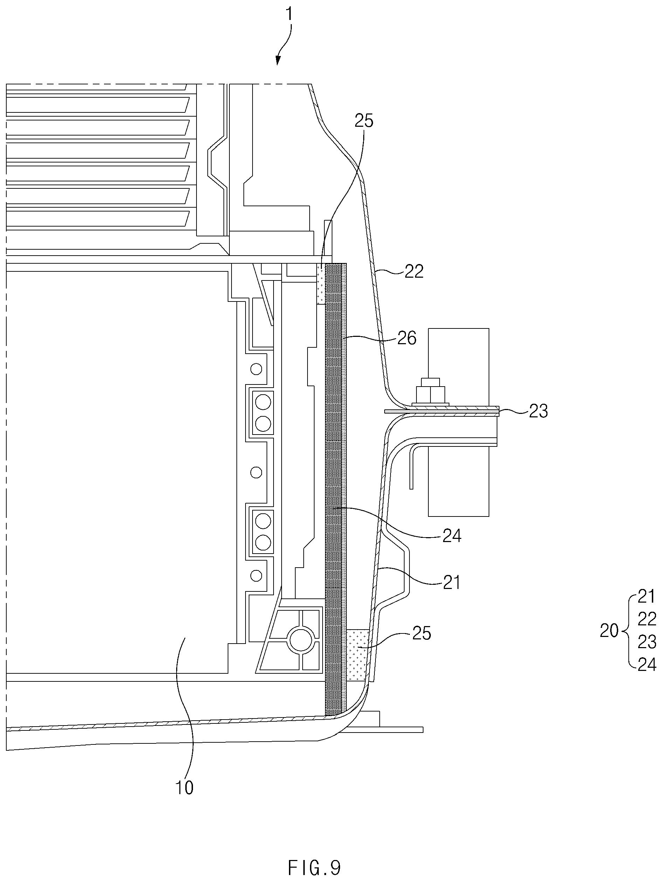

FIG. 9 is a cross-sectional view of a battery pack according to a second embodiment of the present invention.

A battery pack 1 according to a second embodiment of the present invention includes a battery module 10 and a pack housing 20, as illustrated in FIG. 9. The pack housing 20 includes a lower case 21, an upper case 22, a gasket 23, and an insulating member 24.

Here, an elastic member 26 is attached to a surface of the insulating member 24 facing the gasket 23 to maintain an outer shape of the insulating member 24.

That is, the elastic member 26 may maintain the outer appearance of the insulating member 24, and thus, even if the insulating member 24 is deformed, the insulating member 24 may be restored to its original shape, and as a result, the gasket 23 may be stably protected against the flame and the gas, which are generated during the thermal runaway of the battery module 10.

Particularly, the elastic member 26 has heat resistance and is attached to the entire surface of the insulating member 24. Thus, the elastic member 26 may reinforce strength of the entire insulating member 24 and restore the entire insulating member 24 to its original shape.

The material of the elastic member 26 may be polypropylene.

Therefore, the battery pack 1 according to the second embodiment of the present invention may include an elastic member 26 to maintain an external shape of the insulating member 24.

### [Electrode pack according to third embodiment of the present invention]

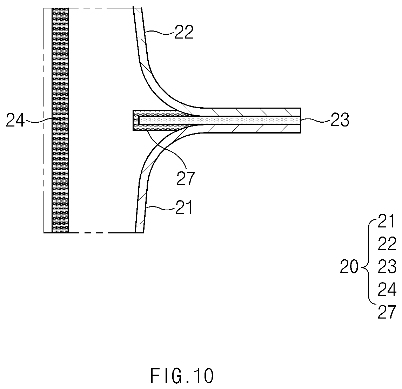

FIG. 10 is a cross-sectional view of a battery pack according to a third embodiment of the present invention.

A battery pack 1 according to a third embodiment of the present invention includes a battery module 10 and a pack housing 20, as illustrated in FIG. 10. The pack housing 20 includes a lower case 21, an upper case 22, a gasket 23, and an insulating member 24.

Here, an insulating layer 27 is applied on an end of the gasket 23 disposed inside the pack housing 20. Thus, the insulating layer 27 may protect the gasket 23 from flames and a gas, which are generated during thermal runaway of the battery module 10.

The insulating layer 27 may be made of the same material as the insulating member 24.

Thus, the battery pack 1 according to the third embodiment of the present invention includes the insulating layer 27 to primarily block the flame and the gas, which are generated during the thermal runaway of the battery module 10, through the insulating member 24 and secondarily block the flame and the gas through the insulating layer 27. As a result, the gasket 23 may be greatly prevented from being damaged.

### [Vehicle according to fourth embodiment of the present invention]

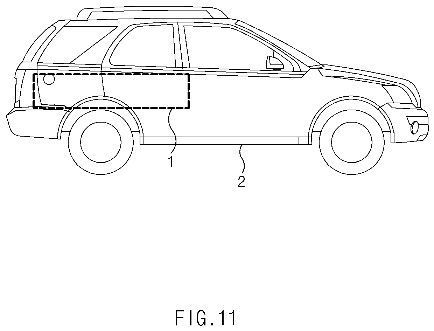

FIG. 11 is a schematic side view of a vehicle according to a fourth embodiment of the present invention.

As illustrated in FIG. 11, a vehicle according to a fourth embodiment of the present invention includes a battery pack 1 and a vehicle body 2 on which the battery pack 1 is installed.

Therefore, the safety of the vehicle according to the fourth embodiment of the present invention may be improved by installing the battery pack 1 including the insulating member 24.

Although the battery pack and the vehicle including the same according to the present invention has been described above with reference to the exemplary drawings, various changes and modifications may be made thereto by one skilled in the art without departing from the scope and spirit of the invention as set forth in the appended claims.

### [Description of the Symbols]

1: Battery pack
2: Vehicle body
10: Battery module
20: Pack housing
21: Lower case
22: Upper case
23: Gasket
24: Insulating member
25: Adhesive
26: Elastic member
27: Insulation layer

## Claims

1. A battery pack comprising:
a battery module; and
a pack housing configured to accommodate the battery module,
wherein the pack housing comprises:
a lower case in which the battery module is accommodated;
an upper case coupled to cover an upper opening of the lower case;
a gasket provided on an interface between the lower case and the upper case; and
an insulating member disposed between the battery module and the gasket.

2. The battery pack of claim 1, wherein the insulating member is disposed between an end of the battery module, which is disposed in a full-length direction of the battery module, and the gasket.

3. The battery pack of claim 2, wherein the insulating member is configured to surround the gasket that is directed toward the end of the battery module.

4. The battery pack of claim 2, wherein the insulating member has an area greater than that of the end of the battery module.

5. The battery pack of claim 1, wherein one side of the insulating member is attached and fixed to an inner wall of the lower case.

6. The battery pack of claim 1, wherein the other side of the insulating member is attached and fixed to an upper end of the battery module.

7. The battery pack of claim 1, wherein the insulating member is made of a flexible insulating paper.

8. The battery pack of claim 7, wherein the insulating paper is made of mica.

9. The battery pack of claim 1, wherein an elastic member configured to maintain an outer appearance of the insulating member is attached to a surface of the insulating member that is directed toward the gasket.

10. The battery pack of claim 9, wherein the elastic member has heat resistance and is attached to an entire surface of the insulating member.

11. The battery pack of claim 1, wherein one end of the insulating member extends up to a bottom surface of the lower case.

12. The battery pack of claim 1, wherein an insulating layer is applied on an end of the gasket disposed inside the pack housing.

13. The battery pack of claim 12, wherein the insulating layer is made of the same material as the insulating member.

14. A vehicle comprising the battery pack of claim 1.
